# EUROPEAN PATENT APPLICATION

(11) **EP 1 693 092 A2**
(43) Date of publication of application: **23.08.2006**
(21) Application number: 06100199.6
(22) Date of filing: 10.01.2006
(51) Int. Cl.: A63F 13/10

(54) **Referencing objects in a virtual environment**

(30) Priority: 01.02.2005 US 49553
(71) Applicant: Microsoft Corporation, Redmond WA 98052 (US)
(72) Inventor: Phillips, Bruce, Redmond WA 98052 (US); Fulton, Bill, Redmond WA 98052 (US)
(74) Representative: Grünecker, Kinkeldey, Stockmair & Schwanhäusser Anwaltssozietät

(57) **Abstract**

The present invention is directed generally toward referencing objects in a virtual environment. One aspect of the invention is directed toward a computer-implemented method for referencing an object in a virtual environment that includes receiving a command from a user to designate an object and designating the object. The method can further include receiving a command from the user to associate selected information with the object and associating the selected information with the object. In certain aspects of the invention, designating the object can include associating a visual reference marking with the object. In other aspects of the invention, the user includes a first user and the method can further include allowing a visual reference marking associated with the object to be viewed by at least one second user and/or revealing the information associated with the object to the at least one second user.

## Description

### TECHNICAL FIELD

The following disclosure relates generally to referencing objects in a virtual environment, including referencing objects in three-dimensional computer-based games.

### BACKGROUND

With the increased availability of high-speed Internet connections in homes, networked multiplayer video or computer games are becoming increasingly popular. In multiplayer games, players can play against one another and/or with one another on various teams. Similar to real-life team games, such as soccer and basketball, a significant part of the enjoyment of playing a multiplayer team game on the computer comes from playing together as an effective team to accomplish selected objectives.

A problem with playing multi-player team games on the computer is that it can be difficult to coordinate activities between team members. For example, in real-life, a combat team may be located proximate to several buildings and a first soldier of the combat team can see an enemy squad enter one of the buildings. The first soldier can point to the building the enemy squad entered and tell a second soldier on his team, "The enemy went into that building, shoot it with the bazooka." Alternately, the first soldier can point to the building the enemy squad entered and then make a gesture (e.g., use a predetermined sign or signal) for the second soldier to shoot the building with the bazooka. In either case, the second soldier can see where the first soldier is pointing and understands which building to shoot. The use of pointing, gesturing, and talking can allow the soldiers to quickly and effectively communicate or coordinate team activities without spending a lot of time talking to each other. Communicating and/or coordinating can be more difficult in a multiplayer team game played on a computer because the players do not have the real-world ability to combine pointing, gesturing, and talking.

For example, when playing a multiplayer team game on the computer, the players can be in separate locations (e.g., different households, different states, or different countries) and cannot see team members pointing or gesturing. Even when multiple players are playing a video game in the same room and are viewing the same screen, it can be difficult to coordinate team activities because the playing environment can be small and object intensive, reducing or eliminating the effectiveness of pointing (e.g., it can be difficult or impossible to determine which object a player is pointing to when a player is pointing at a small screen that is displaying a large number of objects). Additionally, because the players are removed from the playing environment, they must look away from the screen to see other players pointing or gesturing. Accordingly, even when video game players are in the same room, it can be difficult for the players to communicate or coordinate activities.

### SUMMARY

The present invention is directed generally toward referencing objects in a virtual environment, including referencing objects in three-dimensional computer-based games. One aspect of the invention is directed toward a computer-implemented method for referencing an object in a virtual environment that includes receiving a command from a user to designate an object and designating the object. The method can further include receiving a command from the user to associate selected information with the object and associating the selected information with the object. For example, in one embodiment of the invention a user can designate a window, associate a reference marking with the window so that another player can easily identify the window, and associate information with the window that includes displaying the text "caution sniper in this window."

In certain aspects of the invention, designating the object can include associating a visual reference marking with the object. In other aspects of the invention, the user includes a first user and the method can further include allowing a visual reference marking associated with the object to be viewed by at least one second user and/or revealing the information associated with the object to the at least one second user. Some or all of these features can be used to enhance game play and/or used to coordinate activities between players in multiplayer computer games.

Another aspect of the invention is directed toward a computer-implemented method for referencing an object in a virtual environment that includes displaying one or more objects. Each of the objects can be selectable for designation by a user. The method can further include designating at least one of the objects in response to a user selection. The method can still further include associating selected information with the at least one reference marked object in response to a user input.

Still another aspect of the invention is directed toward a computer-readable medium having computer executable instructions for performing steps that include receiving a command to designate an object and designating the object. The steps can further include receiving a command to associate selected information with the object. The steps can still further include associating the selected information with the object.

### BRIEF DESCRIPTION OF THE DRAWINGS

Figure 1 is a schematic diagram illustrating a suitable gaming system on which computer games, video games, and/or other electronic games can be implemented in accordance with several embodiments of the invention.

Figure 2 is a block diagram illustrating functional components of the gaming system of Figure 1 configured in accordance with certain embodiments of the invention.

Figure 3 is a schematic diagram of a network-based gaming environment suitable for implementing various embodiments of the invention.

Figure 4 is a partially schematic illustration of an object that has been referenced in accordance with embodiments of the invention.

Figure 5 is a flow diagram illustrating processes for referencing an object in a virtual environment in accordance with certain embodiments of the invention.

Figure 6 is a partially schematic illustration of an object being referenced in accordance with other embodiments of the invention.

Figure 7 is a partially schematic illustration of an object that has been referenced in accordance with still other embodiments of the invention.

Figure 8 is a partially schematic illustration of an object that has been referenced in accordance with yet other embodiments of the invention.

Figure 9 is a flow diagram illustrating certain processes for referencing an object in a virtual environment in accordance with yet other embodiments of the invention.

### DETAILED DESCRIPTION

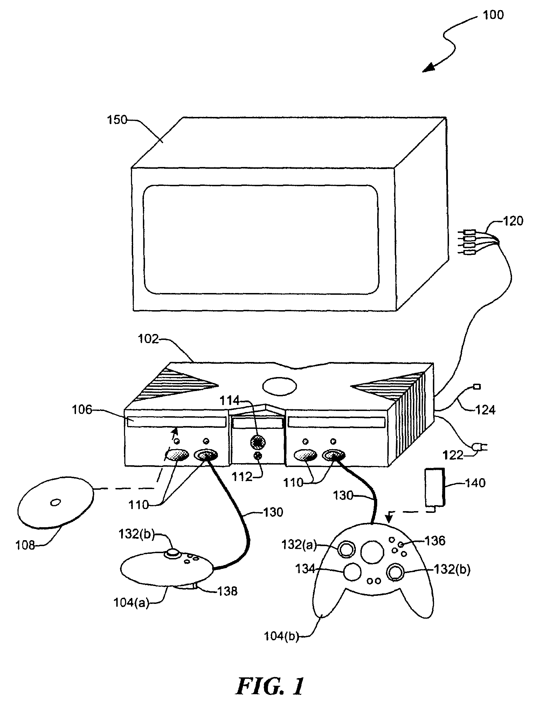

The following disclosure describes several embodiments of systems and methods for referencing objects in a virtual environment, including referencing objects in three-dimensional computer-based games. Specific details of several embodiments of the invention are described below to provide a thorough understanding of such embodiments. However, other details describing well-known structures and routines often associated with computer-based games are not set forth below to avoid unnecessarily obscuring the description of the various embodiments. Further, those of ordinary skill in the art will understand that the invention may have other embodiments that include additional elements or lack one or more of the elements described below with reference to Figures 1-9.

Certain embodiments of referencing features are described below in the context of computer-executable instructions performed by a game console or a general-purpose computer, such as a personal computer. In one embodiment, for example, these computer-executable instructions can be stored on a computer-readable medium, such as a hard disk, a floppy disk, or a CD-ROM. In other embodiments, these instructions can be stored on a server computer system and accessed via a computer network such as an intranet or the Internet. Because the basic structures and functions related to computer-executable routines and corresponding computer implementation systems are well known, they have not been shown or described in detail here to avoid unnecessarily obscuring the described embodiments.

Figure 1 is a schematic diagram illustrating a suitable computing system or gaming system 100 on which computer games, video games, electronic games, and/or virtual environments can be implemented in accordance with several embodiments of the invention. In one aspect of this embodiment, the gaming system 100 includes one or more inceptors or controllers 104 (identified individually as a first controller 104a and a second controller 104b) operably connected to a game console 102. In the illustrated embodiment, the inceptors or controllers 104 are similar to hand-held controllers used in various computer and/or video games. In other embodiments, the gaming system 100 can include other types of inceptors or controllers 104, for example, one or more voice input systems, keyboards, touch screens, or position-sensing devices. The controllers 104 can be connected to the game console 102 via a wired or wireless interface. For example, in the illustrated embodiment, the controllers 104 are universal serial bus (USB) compatible and are connected to the console 102 via serial cables 130 received in sockets 110. The controllers 104 can be equipped with a wide variety of user-interaction mechanisms. For example, in the illustrated embodiment, each controller 104 includes two thumbsticks 132a and 132b, a D-pad 134, various buttons 136, and corresponding triggers 138. The foregoing mechanisms are merely illustrative of the various types of user-interaction mechanisms that can be included with the controllers 104. Accordingly, in other embodiments, other controllers can include more or fewer such mechanisms without departing from the spirit or scope of the present disclosure.

Each of the controllers 104 can be configured to accommodate two portable memory units 140 for portable storage capability. The memory units 140 enable users to store game parameters and import them for play on other game consoles. In the illustrated embodiment, each controller 104 is configured to accommodate two memory units 140. In other embodiments, however, suitable controllers can be configured to accommodate more or fewer memory units, including no memory units.

The game console 102 can include a plurality of cables for connection to supporting systems. For example, the game console 102 can be operably connected to a television or display 150 via audio visual interface cables 120. In addition, a power cable 122 can provide power to the game console 102. Further, a cable or modem connector 124 can facilitate information exchange between the game console 102 and a network, such as the Internet, for broadband data transmission.

The game console 102 can be equipped with an internal hard disk drive (not shown) and a portable media drive 106. The portable media drive 106 can be configured to support various forms of portable storage media as represented by an optical storage disk 108. Examples of suitable portable storage media can include DVD and CD-ROM game disks and the like. The game console 102 can further include a power button 112 and an eject button 114. Depressing the eject button 114 alternately opens and closes a tray associated with the portable media device 106 to allow insertion and extraction of the storage disk 108, or otherwise serves to facilitate removal of the portable storage media.

The gaming system 100 enables players and other users to enjoy various forms of entertainment including games, music, and videos. With the different storage options available, such media can be played from the hard disk drive, the portable media drive 106, the memory units 140, or an online source. For example, the gaming system 100 is capable of playing music from a CD inserted in the portable media drive 106, from a file on the hard disk drive, or from an online streaming source. Similarly, the gaming system 100 can also play a digital audio/video game from a DVD disk inserted in the portable media drive 106, from a file on the hard disk drive (e.g., a file in Active Streaming Format), or an online streaming source.

The gaming system 100 is but one example of a suitable system for implementing embodiments of the invention. Accordingly, the methods and systems disclosed herein are not limited to implementation on the gaming system 100, but extend to numerous other general or special purpose computing systems or configurations. Examples of well-known computing systems, environments, and/or configurations that may be suitable for use with aspects of the invention include personal computers (PCs), server computers, portable and hand-held devices such as personal digital assistants (PDAs), laptop and tablet PCs, multiprocessor systems, microprocessor-based systems, set top boxes, programmable consumer electronics, network PCs, mini-computers, mainframe computers, electronic game consoles, and distributed computing environments that include one or more of the above systems or devices.

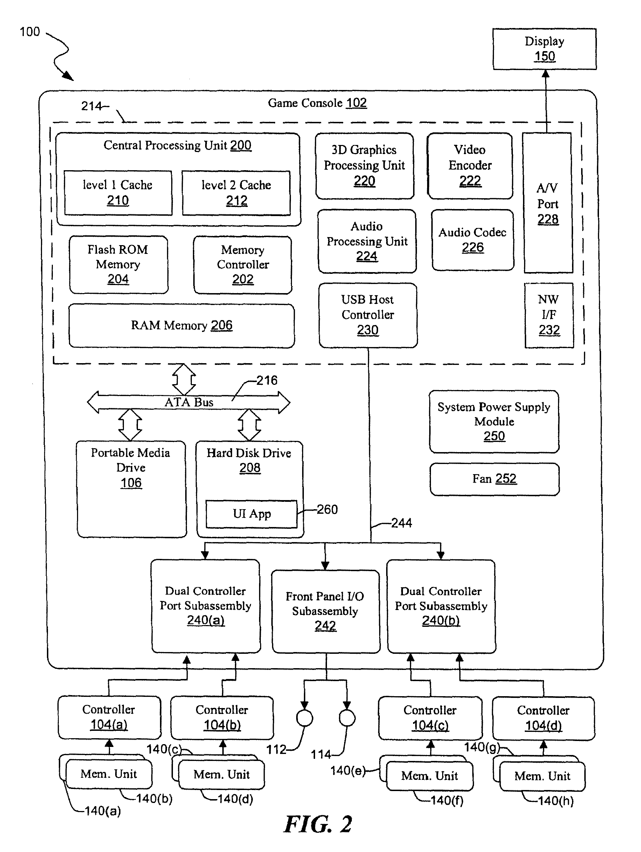

Figure 2 is a block diagram illustrating functional components of the gaming system 100 configured in accordance with an embodiment of the invention. In one aspect of this embodiment, the game console 102 includes a central processing unit (CPU) 200 and a memory controller 202. The memory controller 202 can facilitate processor access to various types of memory. Such memory can include a flash Read Only Memory (ROM) 204, a Random Access Memory (RAM) 206, a hard disk drive 208, and the portable media drive 106. The CPU 200 can be equipped with a level one cache 210 and a level two cache 212 to temporarily store data and reduce the number of necessary memory access cycles, thereby improving processing speed and throughput. The CPU 200, the memory controller 202, and the various memory devices described above are interconnected via one or more buses, such as serial and parallel buses, memory buses, peripheral buses, and/or processor or local buses using any of a variety of bus architectures. Such architectures can include, for example, an Industry Standard Architecture (ISA), a Micro Channel Architecture (MCA), an enhanced ISA (EISA), a Video Electronics Standards Association (VESA) local bus architecture, and a Peripheral Component Interconnects (PCI) bus architecture also known as a mezzanine bus architecture.

In one embodiment, the CPU 200, memory controller 202, ROM 204, and RAM 206 can be integrated into a common module 214. In this embodiment, the ROM 204 is configured as a flash ROM that is connected to the memory controller 202 via a PCI bus and a ROM bus (neither of which is shown). The RAM 206 can be configured as a multiple Double Data Rate Synchronous Dynamic RAM (DDR SDRAM) that is independently controlled by the memory controller 202 via separate buses (not shown). The hard disk drive 208 and portable media drive 106 can be connected to the memory controller 202 via the PCI bus and an AT attachment (ATA) bus 216.

In the illustrated embodiment, a 3D graphics processing unit 220 and a video encoder 222 can form a video processing pipeline for high speed and high resolution graphics processing. Data can be carried from the graphics processing unit 220 to the video encoder 222 via a digital video bus (not shown). An audio processing unit 224 and an audio codec (coder/decoder) 226 can form a corresponding audio processing pipeline with high fidelity and stereo processing. Audio data can be carried between the audio processing unit 224 and the audio codec 226 via a communication link (not shown). The video and audio processing pipelines can output data to an audio/video (A/V) port 228 for transmission to the display 150. In the illustrated embodiment, the video and audio processing components 220-228 are mounted on the module 214.

A USB host controller 230 and a network interface 232 can also be implemented on the module 214. The USB host controller 230 can be coupled to the CPU 200 and the memory controller 202 via a bus (e.g., a PCI bus), and serves as a host for peripheral controllers 104a-104d. The network interface 232 can provide access to a network (e.g., the Intemet, a home network, etc.) and may be any of a wide variety of wire or wireless interface components including an Ethernet card, a modem, a Bluetooth module, a cable modem, and the like.

The game console 102 can include dual controller port subassemblies 240a and 240b, and each subassembly can support two corresponding peripheral controllers 104a-104d. A front panel I/O subassembly 242 supports the functionality of the power button 112 and the eject button 114, as well as any light emitting diodes (LEDs) or other indicators exposed on the outer surface of the game console 102. The subassemblies 240a, 240b, and 242 are coupled to the module 214 via one or more cable assemblies 244.

Eight memory units 140a-140h are illustrated as being connectable to the four controllers 104a-104d in a two memory units per controller configuration. Each memory unit 140 can offer additional storage on which games, game parameters, and other data may be stored. When inserted into a controller, the memory unit 140 can be accessed by the memory controller 202. A system power supply module 250 can provide power to the components of the gaming system 100, and a fan 252 can cool the circuitry within the game console 102.

The game console 102 described above can implement a uniform media portal model that provides a consistent user interface and navigation hierarchy to move users through various entertainment areas. The portal model offers a convenient way to access multiple different types of media content including game data, audio data, and video data regardless of the media type inserted into the portable media drive 106.

To implement the uniform media portal model, a console user interface (UI) application 260 is stored on the hard disk drive 208. When the game console is powered on, various portions of the console application 260 are loaded into RAM 206 and/or caches 210, 212 and executed on the CPU 200. The console application 260 presents a graphical user interface that provides a consistent user experience when navigating to different media types available on the game console. Aspects of the UI application and some of the exemplary screen displays it presents are described below in more detail.

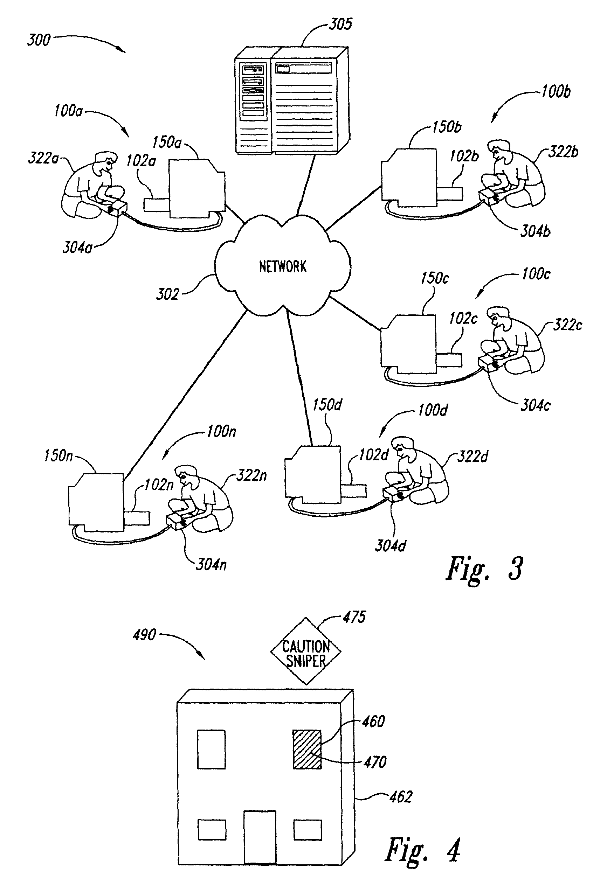

The gaming system 100 may be operated as a standalone system by simply connecting the system to the display 150. In the standalone mode, the gaming system 100 allows one or more players operating the controllers 104 to play games and view them on the display 150. With the broadband connectivity made possible via the network interface 232, however, the gaming system 100 can also be operated in a larger, network-based gaming community, as described in detail below. For example, Figure 3 is a schematic diagram of a network-based gaming environment 300 suitable for implementing various embodiments of the invention. In the illustrated embodiment, the gaming environment 300 includes a plurality of the gaming systems 100, 100a-*n* interconnected via a network 302. Each gaming system 100a-*n* is shown with a corresponding player 322a-*n* using a corresponding controller or inceptor 304a-*n* to interface with the corresponding gaming system 100 a-*n*. As discussed above with reference to Figure 1, the inceptors 304a-*n* can include a hand-held controller, voice input system, keyboard, mouse, touch screen, and/or position-sensing device. In certain embodiments, the inceptors 304a-*n* can be integrated with and/or into various portions of the gaming systems 100a-*n* (e.g., the inceptor 304a-n can be integrated into the displays 150a-*n* and/or game consoles 102a-n). In other embodiments, the gaming systems 100a-*n* can include multiple inceptors 304a-n and/or be used by multiple users or players 322a-*n*.

The network 302 represents any of a wide variety of data communications networks and may include public portions (e.g., the Internet) and/or private portions (e.g., a residential Local Area Network (LAN)). Further, the network 302 may be implemented using any one or more of a wide variety of conventional communications configurations including wired and/or wireless types. Any of a variety of communications protocols can be used to communicate data via network 302, including both public and proprietary protocols (e.g., TCP/IP, IPX/ISPX, and/or NetBEUI). Each of the gaming systems 100 can also be connected to a server computer 305. The server computer 305 can include a number of facilities for performing various aspects of the game and/or the targeting features discussed below.

Figure 4 is a partially schematic illustration of an object 460 that has been referenced in accordance with embodiments of the invention. In Figure 4, the object 460 is a part or portion of a larger item 462 shown in a virtual environment 490 (e.g., the display of a two- or three-dimensional video game or simulation). In the illustrated embodiment, the object 460 (e.g., a window) has been designated with a visual reference marking 470 so that it can be easily identified. In Figure 4, the visual reference marking 470 includes the use of highlighting (e.g., coloring, shading, bolding, and/or using texture to mark or highlight the object 460). In other embodiments, the visual reference marking 470 can include the use of other marking methods, for example, using brackets, arrows, and/or outlining.

In the illustrated embodiment, information 475 has been associated with the object 460 using a symbolic referent tag and a text tag. The symbolic referent tag includes a yellow diamond-shape symbol (e.g., a symbol that generally indicates caution) proximate to the object 460. The text tag includes the word "caution sniper" and is located proximate to the object 460. In Figure 4, the text tag and the symbolic referent tag have been combined or overlaid. In other embodiments, these tags can be separated or used singularly. In still other embodiments, information 475 can be associated with the object 460 using other arrangements, including voice tags, time tags, and/or holograms.

Once the object 460 has been referenced (e.g., the object 460 has been designated and information has been associated with the object 460), users can identify the object and be aware of the information associated with the object. For example, in the real-world a first member of a combat team might point at the window and tell other (e.g., second) team members to use caution because there is a sniper in the window. Because the first member points at the window where the sniper is located, the other members know which window the first member is talking about. Referencing an object in a virtual environment can provide a similar capability for users of a multiplayer computer game. In the virtual environment 490, a first user can reference the object 460 by associating a visual reference mark 470 with the window and associating the caution information 470 to make other (e.g., second) users aware of the situation and/or to coordinate activities.

In certain embodiments, the user can reference the object 460 and can be the only one who can view the visual reference marking 470 and/or who receives the associated information 475. For example, this feature might be useful if the user moves through the virtual environment 490 and periodically returns to, or repeatedly passes certain objects. In other embodiments, the user can select a group of at least one other user to see the visual reference marking 470 and/or receive the associated information 475. For example, in a multi-player game, a user can allow the visual reference marking 470 and/or the associated information 475 to be viewed by the user's team or a portion of the user's team, but not allow the visual reference marking 470 and/or the associated information 475 to be viewed by opposing team members. In still other embodiments, game rules can dictate which players can view the visual reference marking 470 and/or the associated information 475. For example, in certain embodiments all users in the virtual environment 490 (e.g., all players in a video game) can view the visual reference marking 470 and/or receive the associated information 475. In other embodiments, only users or player who meet certain conditions (e.g., have a certain number of game points) can view the visual reference marking 470 and/or receive the associated information 475.

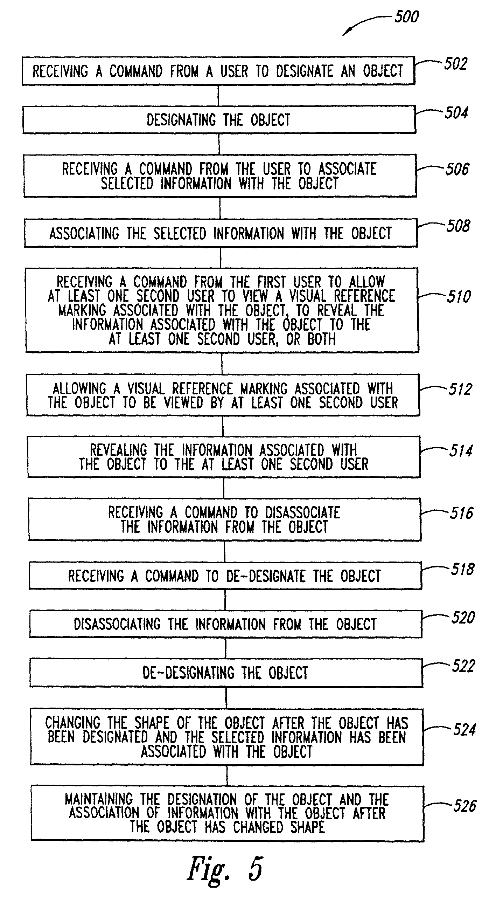

Figure 5 is a flow diagram illustrating a process 500 for referencing an object in a virtual environment in accordance with certain embodiments of the invention. Various portions of the process 500 can be used singularly or in combination in a computer-implemented method and/or stored on a computer-readable medium. The process can include receiving a command from a user to designate an object (process portion 502) and designating the object (process portion 504). The process can further include receiving a command from the user to associate selected information with the object (process portion 506) and associating the selected information with the object (process portion 508). In certain embodiments, a user can have multiple objects referenced at the same time. In other embodiments, a user can only reference one object at a time and/or can only reference objects when certain conditions are met (e.g., when the player has reached a certain level in a game).

As discussed above, in certain embodiments the user can include a first user and the process 500 can further include receiving a command from the first user to allow at least one second user to view a visual reference marking associated with the object, to reveal the information associated with the object to the at least one second user, or both (process portion 510). As discussed above, in other embodiments, the visual reference marking associated with the object and/or the information associated with the object is (or is not) revealed based on a set of rules (e.g., rules of the game) and the first user cannot choose whether and/or to whom the reference marking and/or associated information is/are revealed. In any case, the process 500 can also include allowing a visual reference marking associated with the object to be viewed by at least one second user (process portion 512) and/or revealing the information associated with the object to the at least one second user (process portion 514).

In other embodiments, the process 500 can further include de-designating the object and/or disassociating the information from the object. For example, the process 500 can further include receiving a command to disassociate the information from the object (process portion 516) and/or receiving a command to de-designate the object (process portion 518). The process 500 can still further include disassociating the information from the object (process portion 520) and/or de-designating the object (process portion 522). For example, in a single player game, the user can command that the object be de-designated and/or the information be disassociated with the object (e.g., when the user no longer desires to reference the object). In a multiplayer game, the user can be a first user and there can be at least one second user. In certain embodiments, the first user and/or the second user can command that the object be de-designated and/or the information be disassociated from the object.

In still other embodiments, the object can be de-designated and/or the information disassociated from the object based on various conditions or events (e.g., with out any user commands). For example, in various embodiments, the object can be de-designated and/or the information disassociated from the object based on a set of rules (e.g., game rules). In certain embodiments, the object can be de-designated and/or the associated information can be disassociated from the object after a selected period of time has passed (e.g., the object remains referenced for 15 minutes and then the object is de-designated and the information is disassociated from the object). In other embodiments, certain events (e.g., a game event) can cause the object to be de-designated and/or the information to be disassociated from the object. For example, the object can be de-designated and/or the information to be disassociated from the object when there is a change to the object, when the referenced object is destroyed, when the virtual environment changes (e.g., signal jamming is turned on in a combat game), and/or when the virtual environment is terminated (e.g., upon exiting a computer game).

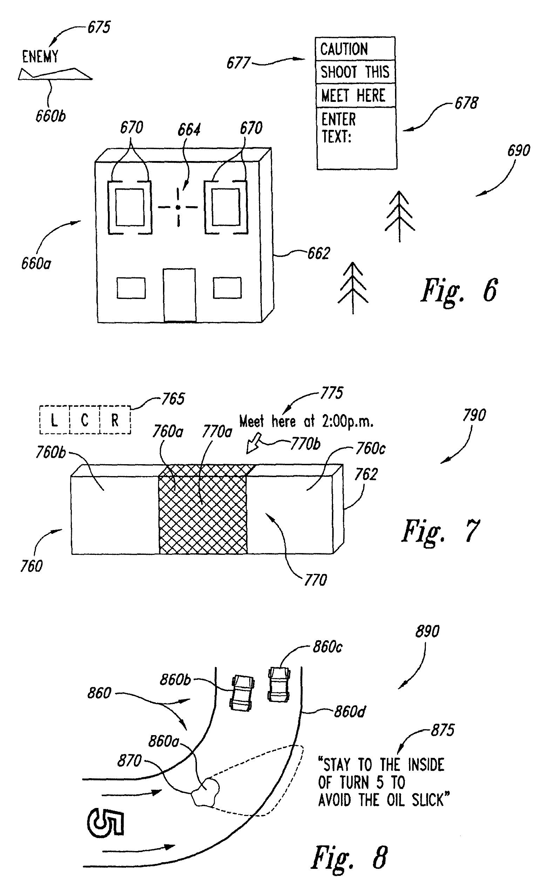

Although in certain embodiments a change in the object can cause the object to no longer be referenced, in other embodiments the object remains referenced even when the object changes (e.g., changes shape or morphs). For example, in certain embodiments the process 500 can further include changing the shape of the object after the object has been designated and the selected information has been associated with the object (process portion 524). The process 500 can still further include maintaining the designation of the object and the association of information with the object after the object has changed shape (process portion 526). This feature is discussed below in further detail with reference to Figure 8.

In Figure 6, a first object 660a is being referenced by a user (the user is not visible in Figure 6) and a second object 660b has already been referenced. In the illustrated embodiment, the first object 660a includes two windows (e.g., two separate pieces) located on a building or item 662 in a three-dimensional virtual environment 690. The user has positioned a reticule 664 proximate to the first object 660a and entered a command (e.g., via a button on a controller or inceptor) to designate the first object 660a. In the illustrated embodiment, visual reference markings 670 (e.g., brackets) appear proximate to the first object 660a when the first object 660a is designated. As discussed above, in other embodiments other visual reference markings can be associated with the first object 660a. In still other embodiments, the first object can be designated (e.g., the object is identified or tagged by software), but there are no visual reference markings viewable by the user.

When the first object 660a is designated, the entire first object is designated (e.g., the software object or the object as it is displayed is designated). In the illustrated embodiment, the object 660a includes two windows that are separated by a wall portion. In other embodiments, the first object 660a can be any item in the virtual environment 690, including the representation of a character, a person, an animal, or a plant. Additionally, the first object can be stationary, moveable, or moving. In certain embodiments, the first object 660a remains designated when the first object 660a moves. In other embodiments, movement of the first object 660a can be an event (discussed above with reference to Figure 5) that causes the object to be de-designated. In still other embodiments, movement of a referenced object can cause the removal of a visual reference marking from the object, but the object remains designated and/or the information remains associated with the object. In the illustrated embodiment, the first object 660a includes two pieces. In other embodiments, the first object 660a can have more or fewer pieces and/or the pieces of the first object 660a can be coupled together. Although in Figure 6, the first object 660a is a piece of a larger item 662 (e.g., a building), in other embodiments the first object 660a can be separate from other items (e.g., a stand-alone object).

In illustrated embodiment, the user selected the first object 660a with the reticule 664. In other embodiments, the first object 660a can be selected using other methods. For example, in other embodiments the first object 660a can be selected by using other pointing methods, by using voice commands, and/or by selecting the first object's identification from a menu of objects. In certain embodiments, an aiming device that is aimed at a video screen and/or an eye tracking device can be used to identify and/or and select the first object 660a. In other embodiments, the user's field of view and/or a direction a user's character is facing in a computer game can be used to select the first object 660a (e.g., when the first object 660a is at close range, when selection of the first object 660a is context sensitive, and/or when there are only a few objects from which to choose). In certain embodiments, selecting the first object 660a to be designated can be included in the command to designate the first object 660a.

In the illustrated embodiment, the first object 660a has been designated, and an information menu 677 and information dialog box 678 have appeared. The user can command information to be associated with the first object 660a by selecting and entering information from the information menu and/or entering information into the information dialog box (e.g., by typing or by voice recognition). In other embodiments, only the information menu 677 or only the information dialog box 678 is displayed.

In still other embodiments, information is selected and/or entered using other methods. For example, in certain embodiments, the selected information is entered using voice commands without an information dialog box. In other embodiments, selected information is automatically associated with the first object 660a when the first object 660a is designated (e.g., when the information that can be associated with an object is limited). In still other embodiments, the way the user commands the first object 660a to be designated automatically associates selected information with the first object 660a. For example, when using a game controller, the user may have three different buttons that can be used to reference mark a first object 660a and each button can associate different information with the first object 660a when used (e.g., a first button can associate "danger" with the first object 660a, a second button can associate "caution", and a third button can associate the message "shoot this" with the first object 660a).

The second object 660b (e.g., a moving aircraft), shown in Figure 6, has already been referenced. In the illustrated embodiment the aircraft has been designated, however, there is no visible reference marking associated with the aircraft. Information 675 associated with the first object 660a, shown in the form of a text tag labeling the aircraft as belonging to the "enemy," is located proximate to the aircraft. In the illustrated embodiment, the text tag moves with the second object 660b and is viewable by a first user and a selected number of second users (e.g., a team in a computer or video game). Accordingly, even though the second object's reference marking is not visible, the first user and the selected second users can identify the second object 660b and receive (e.g., view) the associated information 675.

Figure 7 is a partially schematic illustration of an object 760 that has been referenced in accordance with still other embodiments of the invention. In Figure 7, an item 762 (e.g., a wall) includes three objects 760, shown as a center object 760a, a left object 760b, and a right object 760c. In the illustrated embodiment, the center object 760a has been designated and information has been associated with the center object 760a using verbal commands. The center object 760a was selected by the user maneuvering the user's character in a virtual environment 790 to place the item 762 within the user's field of view. Once the item 762 was within the user's field of view, the user selected the item 762 using a verbal command (e.g., "select wall"). A selection menu 765 (shown in ghosted lines) then appeared indicating that the user needed to select between the three objects 760. The user then selected the center object 760a using a verbal command (e.g., "select center"). The center object 760a was designated with two reference markings 770, shown as a first reference marking 770a (e.g., a crosshatch pattern) and a second reference marking 770b (e.g., an arrow). Additionally, upon selection or designation of the center object 760a the selection menu 765 disappeared (e.g., was removed from the virtual environment 790). The user then associated information with the center object 760a using a verbal command (e.g., "meet here at 2:00 p.m.)." The associated information 775 then appeared proximate to the center object 760a as a text tag ("meet here") and time tag ("at 2:00 p.m.").

As discussed above, in other embodiments the associated information 775 can be revealed using other methods (e.g., a symbolic referent and/or a voice tag). Additionally, in other embodiments, the time tag can have other forms. For example, in the illustrated embodiment the time tag includes a specified time when other users should meet at the center object 760a. In other embodiments, the time tag can include a countdown timer that shows the time remaining until the designated meeting time, a date and/or time stamp corresponding to when the center object 760a was referenced, and/or a running time since the center object 760a was referenced.

In still other embodiments, the user can verbally select an object even when the object is not within the user's field of view (e.g., when there are only a limited number of objects in the environment that can be referenced). In still other embodiments, there can be more or fewer reference markings 770. For example, in other embodiments, the first reference marking 770a can be used without the second reference marking 770b or the second reference marking 770b can be used without the first reference marking 770a.

Figure 8 is a partially schematic illustration of a first object 860a that has been referenced in accordance with yet other embodiments of the invention. In Figure 8, multiple objects 860 are displayed, including a first object 860a (e.g., an oil slick), a second object 860b (e.g., a first car), a third object 860c (e.g., a second car), and a fourth object 860d (e.g., a road). In the illustrated embodiment, the first object 860a has been designated and a visual reference mark 870 and selected information 875 have been associated with the first object 860a. In Figure 8, the visual reference mark 870 includes a bolded outline of the oil slick and the associated information 875 includes a voice or verbal tag that states "stay to the inside of turn five to avoid an oil slick." In the illustrated embodiment, the bolded outline of the oil slick and the associated information 875 are revealed to a select group of users (e.g., a first user and selected second users). When one or more users of the select group is located proximate to the first object 860a (e.g., within a quarter mile of the first object 860a), the voice tag will be played or revealed to the one or more users. Accordingly, the select group of users can identify and avoid the oil slick.

In the illustrated embodiment, the objects 860 are two-dimensional objects in a two-dimensional virtual environment 890. In other embodiments, at least some of the objects 860 and/or at least a portion of the virtual environment 890 can be three-dimensional. Additionally, in still other embodiments, as the oil slick spreads (e.g., from other cars running through the oil slick), the reference mark 870 can automatically adjust to outline the new and/or changing shape of the oil slick. Accordingly, the oil slick can remain designated, the oil slick can remained visually marked, and the selected information 875 can remain associated with the oil slick.

In certain embodiments, the reference mark 870 and the associated information 875 can be removed when specified game events occur (e.g., when the oil slick dissipates or is washed away by rain). In other embodiments, the first object 860a can be designated, but does not have a visual reference marking associated with the first object 860a. The voice tag, however, is still played or revealed when one or more of the selected group of users is proximate to the oil slick. In still other embodiments, when one or more of the selected users is proximate to the oil slick, the associated information 875 can be displayed as a text message instead of, or in addition to, playing the voice tag. In yet other embodiments, the associated information 875 can be displayed using other methods. For example, when one or more users of the selected group is proximate to the oil slick a "pop-up" symbolic referent tag and/or a time tag (e.g., time to the hazard at current speed) can be displayed.

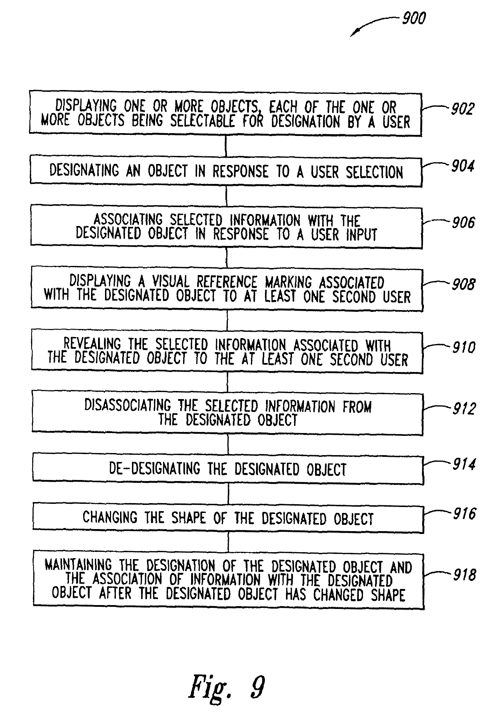

Figure 9 is a flow diagram illustrating another process 900 for referencing an object in a virtual environment in accordance with yet other embodiments of the invention. Various portions of the process 900 can be used singularly or in combination in a computer-implemented method and/or stored on a computer-readable medium. The process 900 includes displaying one or more objects, each of the one or more objects being selectable for designation by a user (process portion 902). The process 900 can further include designating an object in response to a user selection (process portion 904). The process 900 can still further include associating selected information with the designated object in response to a user input (process portion 906).

Many or all of the features described above with reference to Figures 4-8 also apply to the process 900. For example, in other embodiments, the user in the process 900 can include a first user and the process 900 can further include displaying a visual reference marking associated with the designated object to at least one second user (process portion 908) and/or revealing the selected information associated with the designated object to the at least one second user (process portion 910). In still other embodiments, the process 900 can further include disassociating the selected information from the designated object (process portion 912) and/or de-designating the designated object (process portion 914). In yet other embodiments, the process 900 can further include changing the shape of the designated object (process portion 916) and maintaining the designation of the designated object and the association of information with the designated object after the designated object has changed shape (process portion 918).

A feature of some of the embodiments described above is that an object can be referenced in a virtual environment, allowing the object to be easily identifiable and/or allowing information associated with the object to be revealed. This feature can allow a user to reference an object, move through the virtual environment, and later benefit from being able to easily identify the object and/or to easily ascertain information about the object when the user returns to, or passes the object again. For example, in a first person shooter game, this feature can allow a user to identify threats (e.g., sniper locations and/or land mine locations) so that the threats can be identified and avoided as the player moves through the virtual environment. This can reduce overall user workload because the user does not have to rely on memory to identify and locate threats. Additionally, this feature can allow multiple users or participants to effectively and efficiently communicate information having a location context (e.g., a sniper's location) and/or coordinate actions or activities in a virtual environment, in a manner similar to the way players in the real-world environment can using pointing, gesturing, and talking. Accordingly, an advantage of this feature is that it can reduce player workload, improve the ability for players to communicate and/or coordinate activities, and provide greater enjoyment and satisfaction when participating in a virtual environment activity.

From the foregoing, it will be appreciated that specific embodiments of the invention have been described herein for purposes of illustration, but that various modifications may be made without deviating from the spirit and scope of the invention. For example, aspects of the invention described in the context of particular embodiments may be combined or eliminated in other embodiments. Although advantages associated with certain embodiments of the invention have been described in the context of those embodiments, other embodiments may also exhibit such advantages. Additionally, none of the foregoing embodiments need necessarily exhibit such advantages to fall within the scope of the invention. Accordingly, the invention is not limited except as by the appended claims.

## Claims

1. A computer-implemented method for referencing an object in a virtual environment, comprising:
receiving a command from a user to designate an object;
designating the object;
receiving a command from the user to associate selected information with the object; and
associating the selected information with the object.

2. The method of claim 1 wherein designating the object includes associating a visual reference marking with the object.

3. The method of claim 1 wherein associating information with the object includes at least one of using a voice tag, a text tag, a symbolic referent tag, and a time tag.

4. The method of claim 1 wherein the user includes a first user, and wherein the method further comprises at least one of:
allowing a visual reference marking associated with the object to be viewed by at least one second user; and
revealing the information associated with the object to the at least one second user.

5. The method of claim 1 wherein the user includes a first user, and wherein the method further comprises receiving a command from the first user to allow at least one second user to view a visual reference marking associated with the object, to reveal the information associated with the object to the at least one second user, or both.

6. The method of claim 1 wherein receiving a command from the user to associate selected information with the object includes receiving the selected information to be associated with the object.

7. The method of claim 1, further comprising:
changing the shape of the object after the object has been designated and the selected information has been associated with the object; and
maintaining the designation of the object and the association of information with the object after the object has changed shape.

8. The method of claim 1 wherein the object is at least one of stationary, movable, and moving.

9. The method of claim 1 wherein the object includes multiple pieces, is a piece of a larger item, or both.

10. The method of claim 1, further comprising at least one of:
disassociating the information from the object; and
de-designating the object.

11. The method of claim 1, further comprising at least one of:
receiving a command to disassociate the information from the object;
receiving a command to de-designate the object;
disassociating the information from the object; and
de-designating the object.

12. The method of claim 1 wherein receiving a command from a user to designate an object includes receiving a command from a user identifying an object to be designated.

13. A computer-implemented method for referencing an object in a virtual environment, comprising:
displaying one or more objects, each of the one or more objects being selectable for designation by a user;
designating an object in response to a user selection; and
associating selected information with the designated object in response to a user input.

14. The method of claim 13 wherein the user includes a first user, and wherein the method further comprises at least one of:
displaying a visual reference marking associated with the designated object to at least one second user; and
revealing the selected information associated with the designated object to the at least one second user.

15. The method of claim 13, further comprising:
changing the shape of the designated object; and
maintaining the designation of the designated object and the association of information with the designated object after the designated object has changed shape.

16. The method of claim 13, further comprising at least one of:
disassociating the selected information from the designated object; and
de-designating the designated object.

17. A computer-readable medium having computer-executable instructions for performing steps comprising:
receiving a command from a user to designate an object;
designating the object;
receiving a command from the user to associate selected information with the object; and
associating the selected information with the object.

18. The computer-readable medium of claim 17 wherein the user includes a first user, and wherein the steps further comprise at least one of:
allowing a visual reference marking associated with the object to be viewed by at least one second user; and
revealing the information associated with the object to the at least one second user.

19. The computer-readable medium of claim 17, wherein the steps further comprise:
changing the shape of the object after the object has been designated and the selected information has been associated with the object; and
maintaining the designation of the object and the association of information with the object after the object has changed shape.

20. The computer-readable medium of claim 17, wherein the steps further comprise at least one of:
disassociating the information from the object; and
de-designating the object.
